# EUROPÄISCHE PATENTANMELDUNG

(11) **EP 4 468 093 A2**
(43) Veröffentlichungstag der Anmeldung: **27.11.2024**
(21) Anmeldenummer: 24162070.7
(22) Anmeldetag: 07.03.2024
(51) Int. Cl.: G05B 19/042

(54) **VERFAHREN UND VORRICHTUNG ZUM VERARBEITEN VON MIT EINER ELEKTRISCHEN MASCHINE ASSOZIIERTEN DATEN**

(30) Priorität: 05.04.2023 DE 102023108792
(71) Anmelder: Dunkermotoren GmbH, 79848 Bonndorf (DE)
(72) Erfinder: Mülhaupt, Lucas, 79771 Klettgau (DE); Burgert, Michael, 79199 Kirchzarten (DE); Weishaar, Markus, 79848 Bonndorf (DE)
(74) Vertreter: DREISS Patentanwälte PartG mbB

(57) **Zusammenfassung**

Verfahren, beispielsweise computerimplementiertes Verfahren, zum Verarbeiten von mit wenigstens einer elektrischen Maschine, beispielsweise einem Elektromotor, assoziierten Daten, aufweisend: Bereitstellen einer ersten Funktion zur Kommunikation mit einer ersten elektrischen Maschine über eine Maschinenschnittstelle, Bereitstellen einer zweiten Funktion zur Kommunikation mit wenigstens einer weiteren elektrischen Maschine über eine Kommunikationsschnittstelle, wobei die Kommunikationsschnittstelle verschieden ist von der Maschinenschnittstelle.

## Beschreibung

Die Offenbarung betrifft ein Verfahren zum Verarbeiten von mit einer elektrischen Maschine assoziierten Daten.

Die Offenbarung betrifft ferner eine Vorrichtung zum Verarbeiten von mit einer elektrischen Maschine assoziierten Daten.

Beispielhafte Ausführungsformen beziehen sich auf ein Verfahren, beispielsweise ein computerimplementiertes Verfahren, zum Verarbeiten von mit wenigstens einer elektrischen Maschine, beispielsweise einem Elektromotor, assoziierten Daten, aufweisend: Bereitstellen einer ersten Funktion zur Kommunikation mit einer ersten elektrischen Maschine über eine Maschinenschnittstelle, Bereitstellen einer zweiten Funktion zur Kommunikation mit wenigstens einer weiteren elektrischen Maschine über eine Kommunikationsschnittstelle, wobei die Kommunikationsschnittstelle verschieden ist von der Maschinenschnittstelle. Bei weiteren beispielhaften Ausführungsformen wird dadurch eine effiziente und flexible Kommunikation mit der ersten elektrischen Maschine und/oder mit der wenigstens einen weiteren elektrischen Maschine ermöglicht.

Bei weiteren beispielhaften Ausführungsformen ist die Maschinenschnittstelle beispielsweise als lokale Schnittstelle bzw. Schnittstelle mit vergleichsweise geringer räumlicher Reichweite (z.B. kleiner 100 m (Meter), beispielsweise kleiner 10 m, beispielsweise kleiner 1m) ausgebildet.

Bei weiteren beispielhaften Ausführungsformen ist die Maschinenschnittstelle beispielsweise ausgebildet für eine Datenkommunikation (z.B. Senden und/oder Empfangen von Informationen, beispielsweise Daten) zwischen einer Vorrichtung, die zumindest manche Aspekte gemäß beispielhaften Ausführungsformen ausführt, und der ersten elektrischen Maschine, beispielsweise genau einer elektrischen Maschine, oder einer vergleichsweise kleinen Anzahl von elektrischen Maschinen im Bereich der Maschinenschnittstelle.

Bei weiteren beispielhaften Ausführungsformen ist die Kommunikationsschnittstelle beispielsweise mit einem Kommunikationssystem, beispielsweise Netzwerk, beispielsweise vom Ethernet-Typ, beispielsweise Industrial Ethernet-Typ, assoziiert und ermöglicht eine Datenkommunikation beispielsweise über vergleichsweise große Distanzen, beispielsweise größer 10m oder größer 100m oder mehr.

Bei weiteren beispielhaften Ausführungsformen ermöglicht die Kommunikationsschnittstelle eine Datenkommunikation mit mehreren anderen Einheiten, beispielsweise, z.B. weiteren, elektrischen Maschinen und/oder Einheiten anderen Typs wie z.B. Datenverarbeitungseinrichtungen (z.B. Computer, z.B. Personal Computer), IoT- bzw. IIoT-Geräten, öffentlichen Netzwerken (z.B. Internet), (virtuellen) privaten Netzwerken (z.B. Firmennetzwerk bzw. Netzwerk einer Fertigungseinrichtung), Cloud-Systemen bzw. Cloud-Servern, Edge-Servern, usw.

Bei weiteren beispielhaften Ausführungsformen ist vorgesehen, dass das Verfahren wenigstens eines der folgenden Elemente aufweist: a) Bereitstellen der ersten Funktion mittels einer Bibliothek, b) Bereitstellen der zweiten Funktion mittels einer bzw. der Bibliothek. Beispielsweise ist die Bibliothek als Programm- bzw. Funktionsbibliothek ausgebildet, beispielsweise als dynamisch bindbare bzw. einbindbare Bibliothek.

Bei weiteren beispielhaften Ausführungsformen kann die ersten Funktion z.B. mittels einer ersten Bibliothek bereitgestellt werden, und die zweite Funktion kann z.B. mittels einer zweiten Bibliothek bereitgestellt werden, die von der ersten Bibliothek verschieden ist.

Bei weiteren beispielhaften Ausführungsformen können die erste Funktion und die zweite Funktion mittels derselben Bibliothek bereitgestellt werden.

Bei weiteren beispielhaften Ausführungsformen ist vorgesehen, dass das Verfahren wenigstens eines der folgenden Elemente aufweist: a) Empfangen von ersten Informationen über die Maschinenschnittstelle von der ersten elektrischen Maschine, b) Senden von zweiten Informationen über die Maschinenschnittstelle an die erste elektrische Maschine, c) Empfangen von dritten Informationen über die Kommunikationsschnittstelle von der wenigstens einen weiteren elektrischen Maschine, d) Senden von vierten Informationen über die Kommunikationsschnittstelle an die wenigstens eine weitere elektrische Maschine, e) Verarbeiten wenigstens eines Teils der ersten Informationen, f) Verarbeiten wenigstens eines Teils der dritten Informationen.

Bei weiteren beispielhaften Ausführungsformen kann z.B. wenigstens ein Teil der zweiten Informationen und/oder wenigstens ein Teil der vierten Informationen basierend wenigstens teilweise auf den ersten Informationen und/oder den dritten Informationen gebildet werden.

Bei weiteren beispielhaften Ausführungsformen ist vorgesehen, dass das Verfahren aufweist: Empfangen der ersten Informationen über die Maschinenschnittstelle von der ersten elektrischen Maschine, Verarbeiten wenigstens eines Teils der ersten Informationen, wobei verarbeitete erste Informationen erhalten werden, Senden der vierten Informationen basierend wenigstens auf den verarbeiteten ersten Informationen über die Kommunikationsschnittstelle an die wenigstens eine weitere elektrische Maschine.

Bei weiteren beispielhaften Ausführungsformen ist vorgesehen, dass das Verfahren aufweist: Empfangen der dritten Informationen über die Kommunikationsschnittstelle von der wenigstens einen weiteren elektrischen Maschine, Verarbeiten wenigstens eines Teils der dritten Informationen, wobei verarbeitete dritte Informationen erhalten werden, Senden der zweiten Informationen basierend wenigstens auf den verarbeiteten dritten Informationen über die Maschinenschnittstelle an die erste elektrische Maschine.

Bei weiteren beispielhaften Ausführungsformen ist vorgesehen, dass das Verfahren aufweist: Ausführen wenigstens einer ersten Teilfunktion, die mit einer, beispielsweise verteilten, Applikation assoziiert ist, die wenigstens manche Aspekte eines Zusammenwirkens von mehreren elektrischen Maschinen steuert, wobei beispielsweise wenigstens eine zweite mit der Applikation assoziierte Teilfunktion durch wenigstens eine weitere Einheit ausführbar ist, die mit der wenigstens einen weiteren elektrischen Maschine assoziiert ist.

Bei weiteren beispielhaften Ausführungsformen ist vorgesehen, dass das Verfahren wenigstens eines der folgenden Elemente aufweist: a) zumindest zeitweises Einnehmen einer Client-Rolle, beispielsweise für eine zumindest zeitweise Steuerung der ersten elektrischen Maschine durch eine andere Einheit, beispielsweise wenigstens eine weitere elektrische Maschine bzw. eine mit der wenigstens einen weiteren elektrischen Maschine assoziierte Vorrichtung, b) zumindest zeitweises Einnehmen einer Server-Rolle bzw. Master-Rolle, beispielsweise zur Steuerung einer oder mehrerer elektrischer Maschinen.

Bei weiteren beispielhaften Ausführungsformen ist vorgesehen, dass das Verfahren wenigstens eines der folgenden Elemente aufweist: a) zumindest zeitweises Steuern, beispielsweise Regeln, eines Betriebs der wenigstens einen weiteren elektrischen Maschine, beispielsweise über die Kommunikationsschnittstelle, beispielsweise im Sinne einer bzw. der verteilten Applikation, b) zumindest zeitweises Steuern, beispielsweise Regeln, eines Betriebs der ersten elektrischen Maschine, beispielsweise über die Maschinenschnittstelle, beispielsweise im Sinne einer bzw. der verteilten Applikation.

Bei weiteren beispielhaften Ausführungsformen ist vorgesehen, dass das Verfahren wenigstens eines der folgenden Elemente aufweist: a) Ausführen eines ersten Computerprogramms in einem, beispielsweise mittels einer Speicherschutzeinrichtung verwalteten, Ressourcenbereich, beispielsweise Speicherbereich, wobei beispielsweise das erste Computerprogramm mit einer bzw. der ersten Teilfunktion einer bzw. der, beispielsweise verteilten, Applikation assoziiert ist, b) Austauschen von Informationen mittels des ersten Computerprogramms mit der ersten elektrischen Maschine über die Maschinenschnittstelle, c) Austauschen von Informationen mittels des ersten Computerprogramms mit der wenigstens einen weiteren elektrischen Maschine über die Kommunikationsschnittstelle.

Bei weiteren beispielhaften Ausführungsformen ist vorgesehen, dass das Verfahren wenigstens eines der folgenden Elemente aufweist: a) Bereitstellen einer ersten Recheneinrichtung zur Ausführung wenigstens eines Computerprogramms zur Steuerung wenigstens der ersten elektrischen Maschine, beispielsweise über die Maschinenschnittstelle, und, optional, Ausführen des wenigstens einen Computerprogramms zur Steuerung wenigstens der ersten elektrischen Maschine mittels der ersten Recheneinrichtung, b) Bereitstellen eines bzw. des ersten Computerprogramms, das mit einer bzw. der ersten Teilfunktion einer bzw. der, beispielsweise verteilten, Applikation assoziiert ist, zur Steuerung wenigstens der ersten elektrischen Maschine und, optional, Ausführen des ersten Computerprogramms mittels der ersten Recheneinrichtung, c) Bereitstellen eines Computerprogramms zur Steuerung der Kommunikationsschnittstelle, und, optional, Ausführen des Computerprogramms zur Steuerung der Kommunikationsschnittstelle mittels der ersten Recheneinrichtung, d) Bereitstellen einer zweiten Recheneinrichtung, die von der ersten Recheneinrichtung verschieden ist, zur Steuerung der Kommunikationsschnittstelle, e) Bereitstellen eines Computerprogramms zur Steuerung der Kommunikationsschnittstelle, und, optional, Ausführen des Computerprogramms zur Steuerung der Kommunikationsschnittstelle mittels der zweiten Recheneinrichtung.

Bei weiteren beispielhaften Ausführungsformen ist vorgesehen, dass das Verfahren aufweist: Bereitstellen eines Computerprogramms zur Steuerung eines Systems aufweisend mehrere elektrische Maschinen, und, optional, Ausführen des Computerprogramms zur Steuerung des Systems mittels der ersten Recheneinrichtung und/oder der zweiten Recheneinrichtung. Bei weiteren beispielhaften Ausführungsformen ist vorgesehen, dass das Ausführen des Computerprogramms zur Steuerung des Systems wenigstens eines der folgenden Elemente aufweist: a) Informationsaustausch mit einer bzw. der ersten elektrischen Maschine über die Maschinenschnittstelle, b) Informationsaustausch mit wenigstens einer weiteren elektrischen Maschine der mehreren elektrischen Maschinen über die Kommunikationsschnittstelle.

Bei weiteren beispielhaften Ausführungsformen ist vorgesehen, dass die Kommunikationsschnittstelle eine Ethernet-Schnittstelle, beispielsweise Industrial Ethernet-Schnittstelle, ist.

Weitere beispielhafte Ausführungsformen beziehen sich auf eine Vorrichtung zur Ausführung des Verfahrens gemäß den Ausführungsformen.

Weitere beispielhafte Ausführungsformen beziehen sich auf eine Vorrichtung gemäß den Ausführungsformen, aufweisend wenigstens eines der folgenden Elemente: a) die Maschinenschnittstelle, b) die Kommunikationsschnittstelle, c) eine bzw. die erste Recheneinrichtung, d) eine bzw. die zweite Recheneinrichtung.

Weitere beispielhafte Ausführungsformen beziehen sich auf eine elektrische Maschine, beispielsweise Elektromotor, beispielsweise rotierender Elektromotor oder Linearmotor, aufweisend wenigstens eine Vorrichtung gemäß den Ausführungsformen.

Weitere beispielhafte Ausführungsformen beziehen sich auf ein computerlesbares Speichermedium, umfassend Befehle, die bei der Ausführung durch einen Computer diesen veranlassen, das Verfahren gemäß den Ausführungsformen auszuführen.

Weitere beispielhafte Ausführungsformen beziehen sich auf ein Computerprogramm, umfassend Befehle, die bei der Ausführung des Programms durch einen Computer diesen veranlassen, das Verfahren gemäß den Ausführungsformen auszuführen.

Weitere beispielhafte Ausführungsformen beziehen sich auf ein Datenträgersignal, das das Computerprogramm gemäß den Ausführungsformen überträgt und/oder charakterisiert.

Weitere beispielhafte Ausführungsformen beziehen sich auf eine Verwendung des Verfahrens gemäß den Ausführungsformen und/oder der Vorrichtung gemäß den Ausführungsformen und/oder der elektrischen Maschine gemäß den Ausführungsformen und/oder des computerlesbaren Speichermediums gemäß den Ausführungsformen und/oder des Computerprogramms gemäß den Ausführungsformen und/oder des Datenträgersignals gemäß den Ausführungsformen für wenigstens eines der folgenden Elemente: a) Steuern und/oder Regeln eines Betriebs wenigstens einer elektrischen Maschine, b) Ermöglichen einer, beispielsweise freien und/oder deterministischen, beispielsweise horizontalen, Kommunikation von einer ersten elektrischen Maschine bzw. einer mit der ersten elektrischen Maschine assoziierten Vorrichtung zu wenigstens einer weiteren elektrischen Maschine bzw. wenigstens einer mit der weiteren elektrischen Maschine assoziierten Vorrichtung, c) Verwendung eines Ethernet-Kommunikationssystems, beispielsweise Netzwerks, zur Realisierung von verteilten Applikationen, die mit wenigstens einer elektrischen Maschine assoziiert sind, d) dezentrale Implementierung von Anwendungen für eine Steuerung und/oder Regelung, die wenigstens eine elektrische Maschine verwenden, e) Vermeiden einer, beispielsweise dedizierten, Master-Rolle für einen Datenaustausch bezüglich wenigstens einer elektrischen Maschine, f) Bereitstellen mehrerer Kommunikationskanäle, beispielsweise über ein selbes Busmedium eines Kommunikationssystems, beispielsweise Netzwerks, wobei beispielsweise ein erster Kommunikationskanal für eine Steuerung und/oder Regelung wenigstens einer elektrischen Maschine verwendbar ist, und wobei beispielsweise ein zweiter Kommunikationskanal für Aspekte des Internet-of-Things, IoT, beispielsweise Industrial IoT, IIoT, verwendbar ist, g) Erhöhen einer Ausfallsicherheit, h) Bereitstellen und/oder Betreiben eines Netzwerks von elektrischen Maschinen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
Fig. 1 schematisch ein vereinfachtes Flussdiagramm gemäß beispielhaften Ausführungsformen,
Fig. 2 schematisch ein vereinfachtes Blockdiagramm gemäß beispielhaften Ausführungsformen,
Fig. 3 schematisch ein vereinfachtes Flussdiagramm gemäß beispielhaften Ausführungsformen,
Fig. 4 schematisch ein vereinfachtes Flussdiagramm gemäß beispielhaften Ausführungsformen,
Fig. 5 schematisch ein vereinfachtes Flussdiagramm gemäß beispielhaften Ausführungsformen,
Fig. 6 schematisch ein vereinfachtes Flussdiagramm gemäß beispielhaften Ausführungsformen,
Fig. 7 schematisch ein vereinfachtes Blockdiagramm gemäß beispielhaften Ausführungsformen,
Fig. 8 schematisch ein vereinfachtes Flussdiagramm gemäß beispielhaften Ausführungsformen,
Fig. 9 schematisch ein vereinfachtes Flussdiagramm gemäß beispielhaften Ausführungsformen,
Fig. 10 schematisch ein vereinfachtes Flussdiagramm gemäß beispielhaften Ausführungsformen,
Fig. 11 schematisch ein vereinfachtes Blockdiagramm gemäß beispielhaften Ausführungsformen,
Fig. 12 schematisch ein vereinfachtes Flussdiagramm gemäß beispielhaften Ausführungsformen,
Fig. 13 schematisch ein vereinfachtes Flussdiagramm gemäß beispielhaften Ausführungsformen,
Fig. 14 schematisch ein vereinfachtes Blockdiagramm gemäß beispielhaften Ausführungsformen,
Fig. 15 schematisch ein vereinfachtes Blockdiagramm gemäß beispielhaften Ausführungsformen,
Fig. 16 schematisch Aspekte von Verwendungen gemäß beispielhaften Ausführungsformen.

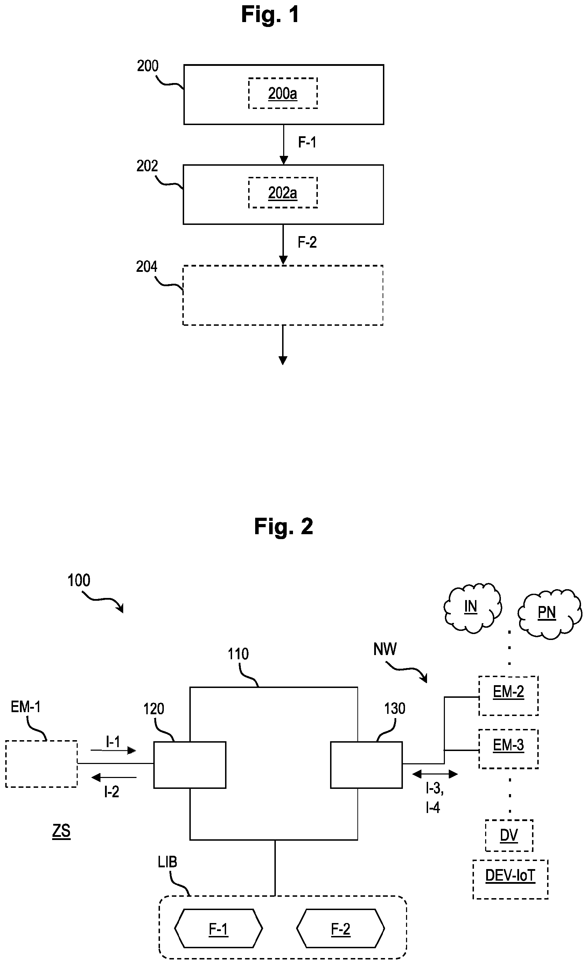

Beispielhafte Ausführungsformen, vgl. Fig. 1, 2, beziehen sich auf ein Verfahren, beispielsweise ein computerimplementiertes Verfahren, zum Verarbeiten von mit wenigstens einer elektrischen Maschine EM-1 (Fig. 2), beispielsweise einem Elektromotor, assoziierten Daten, aufweisend: Bereitstellen 200 (Fig. 1) einer ersten Funktion F-1 zur Kommunikation mit einer ersten elektrischen Maschine EM-1 über eine Maschinenschnittstelle 120, Bereitstellen 202 einer zweiten Funktion F-2 zur Kommunikation mit wenigstens einer weiteren elektrischen Maschine EM-2, EM-3 über eine Kommunikationsschnittstelle 130, wobei die Kommunikationsschnittstelle 130 verschieden ist von der Maschinenschnittstelle 120. Bei weiteren beispielhaften Ausführungsformen wird dadurch eine effiziente und flexible Kommunikation einer das Verfahren ausführenden Vorrichtung 100 mit der ersten elektrischen Maschine EM-1 und/oder mit der wenigstens einen weiteren elektrischen Maschine EM-2, EM-3, ... ermöglicht.

Bei weiteren beispielhaften Ausführungsformen, Fig. 2, kann die Vorrichtung 100 beispielsweise wenigstens eine Recheneinrichtung 110 aufweisen, z.B. zur Ausführung von wenigstens manchen Aspekten gemäß beispielhaften Ausführungsformen.

Bei weiteren beispielhaften Ausführungsformen, Fig. 2, ist die Maschinenschnittstelle 120 beispielsweise als lokale Schnittstelle bzw. Schnittstelle mit vergleichsweise geringer räumlicher Reichweite (z.B. kleiner 100 m (Meter), beispielsweise kleiner 10 m, beispielsweise kleiner 1 m) ausgebildet. Mit anderen Worten ist z.B. die Vorrichtung 100 bzw. die Recheneinrichtung 110 vergleichsweise nahe an der ersten elektrischen Maschine EM-1 angeordnet, beispielsweise an die erste elektrischen Maschine EM-1 oder an ein die erste elektrischen Maschine EM-1 aufnehmendes Zielsystem ZS (z.B. Einrichtung der Automatisierungstechnik) angebaut bzw. darin eingebaut.

Bei weiteren beispielhaften Ausführungsformen, Fig. 2, ist die Maschinenschnittstelle 120 beispielsweise ausgebildet für eine Datenkommunikation (z.B. Senden und/oder Empfangen von Informationen 1-1, I-2, beispielsweise Daten) zwischen einer bzw. der Vorrichtung 100, die zumindest manche Aspekte gemäß beispielhaften Ausführungsformen ausführt, und der ersten elektrischen Maschine EM-1, beispielsweise genau einer elektrischen Maschine, oder einer vergleichsweise kleinen Anzahl von elektrischen Maschinen (nicht gezeigt) im Bereich der Maschinenschnittstelle 120.

Bei weiteren beispielhaften Ausführungsformen, Fig. 2, ist die Kommunikationsschnittstelle 130 beispielsweise mit einem Kommunikationssystem, beispielsweise Netzwerk NW, beispielsweise vom Ethernet-Typ, beispielsweise Industrial Ethernet-Typ, assoziiert und ermöglicht eine Datenkommunikation beispielsweise über vergleichsweise große Distanzen, beispielsweise größer 10 m oder größer 100 m oder mehr.

Bei weiteren beispielhaften Ausführungsformen, Fig. 2, ermöglicht die Kommunikationsschnittstelle 130 eine Datenkommunikation mit mehreren anderen Einheiten, beispielsweise, z.B. weiteren, elektrischen Maschinen EM-2, EM-3, ... und/oder Einheiten anderen Typs wie z.B. Datenverarbeitungseinrichtungen DV (z.B. Computer, z.B. Personal Computer), IoT- bzw. IIoT-Geräten DEV-IoT, öffentlichen Netzwerken (z.B. Internet) IN, (virtuellen) privaten Netzwerken PN (z.B. Firmennetzwerk bzw. Netzwerk einer Fertigungseinrichtung), Cloud-Systemen bzw. Cloud-Servern, Edge-Servern, usw.

Bei weiteren beispielhaften Ausführungsformen, Fig. 1, ist vorgesehen, dass das Verfahren wenigstens eines der folgenden Elemente aufweist: a) Bereitstellen 200a der ersten Funktion F-1 mittels einer Bibliothek LIB (Fig. 2), b) Bereitstellen 202a der zweiten Funktion F-2 mittels einer bzw. der Bibliothek LIB. Beispielsweise ist die Bibliothek LIB als Programm- bzw. Funktionsbibliothek ausgebildet, beispielsweise als statisch oder dynamisch bindbare bzw. einbindbare Bibliothek.

Bei weiteren beispielhaften Ausführungsformen kann die erste Funktion F-1 z.B. mittels einer ersten Bibliothek LIB bereitgestellt werden, und die zweite Funktion F-2 kann z.B. mittels einer zweiten Bibliothek (nicht gezeigt) bereitgestellt werden, die von der ersten Bibliothek LIB verschieden ist.

Bei weiteren beispielhaften Ausführungsformen, Fig. 2, können die erste Funktion F-1 und die zweite Funktion F-2 mittels derselben Bibliothek LIB bereitgestellt werden.

Bei weiteren beispielhaften Ausführungsformen, s. den optionalen Block 204 gemäß Fig. 1, können die erste Funktion F-1 und die zweite Funktion F-2 verwendet werden für einen flexiblen Austausch (z.B. Senden und/oder Empfangen) von Informationen I-1, 1-2, 1-3, I-4, beispielsweise Daten, für einen Betrieb wenigstens einer Komponente 100, 110, 120, 130, EM-1, EM-2, EM-3, NW, DV, DEV-IoT, PN, IN, ZS, ...

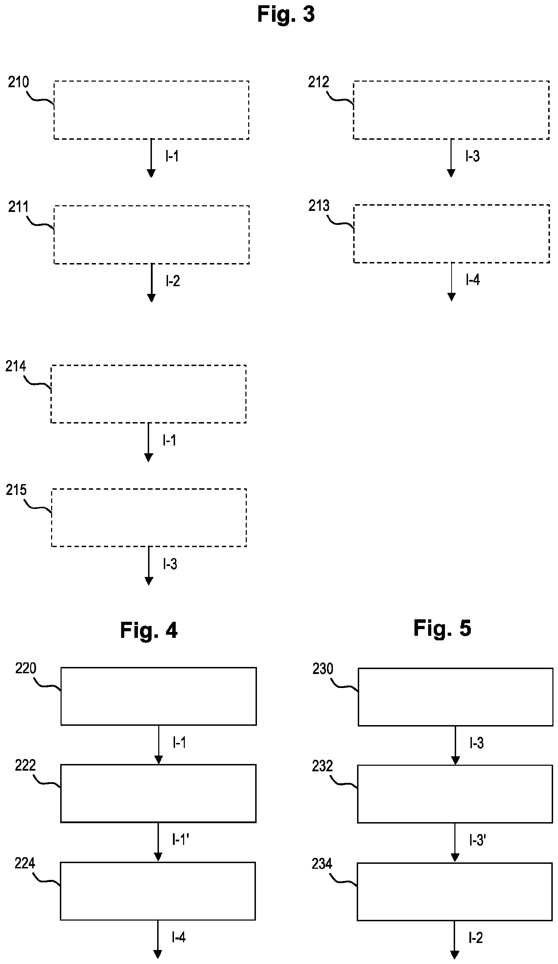

Bei weiteren beispielhaften Ausführungsformen, Fig. 3, ist vorgesehen, dass das Verfahren wenigstens eines der folgenden Elemente aufweist: a) Empfangen 210 von ersten Informationen I-1 über die Maschinenschnittstelle 120 (Fig. 2) von der ersten elektrischen Maschine EM-1, b) Senden 211 (Fig. 3) von zweiten Informationen I-2 über die Maschinenschnittstelle 120 an die erste elektrische Maschine EM-1, c) Empfangen 212 von dritten Informationen I-3 über die Kommunikationsschnittstelle 130 von der wenigstens einen weiteren elektrischen Maschine EM-2, EM-3, ..., d) Senden 213 von vierten Informationen I-4 über die Kommunikationsschnittstelle 130 an die wenigstens eine weitere elektrische Maschine EM-2, EM-3, ..., e) Verarbeiten 214 wenigstens eines Teils der ersten Informationen I-1, f) Verarbeiten 215 wenigstens eines Teils der dritten Informationen I-3.

Bei weiteren beispielhaften Ausführungsformen kann z.B. wenigstens ein Teil der zweiten Informationen I-2 und/oder wenigstens ein Teil der vierten Informationen I-4 basierend wenigstens teilweise auf den ersten Informationen I-1 und/oder den dritten Informationen I-3 gebildet werden.

Bei weiteren beispielhaften Ausführungsformen, Fig. 4, ist vorgesehen, dass das Verfahren aufweist: Empfangen 220 der ersten Informationen I-1 über die Maschinenschnittstelle 120 (Fig. 2) von der ersten elektrischen Maschine EM-1, Verarbeiten wenigstens eines Teils der ersten Informationen I-1, wobei verarbeitete erste Informationen I-1' erhalten werden, Senden 224 der vierten Informationen I-4 basierend wenigstens auf den verarbeiteten ersten Informationen I-1' über die Kommunikationsschnittstelle 130 (Fig. 3) an die wenigstens eine weitere elektrische Maschine EM-2, EM-3, ... und/oder an wenigstens eine der anderen Einheiten bzw. Einrichtungen DV, DEV-IoT, PN, IN, NW.

Bei weiteren beispielhaften Ausführungsformen, Fig. 5, ist vorgesehen, dass das Verfahren aufweist: Empfangen 230 der dritten Informationen I-3 über die Kommunikationsschnittstelle 130 (Fig. 2) von der wenigstens einen weiteren elektrischen Maschine EM-2, EM-3, ..., Verarbeiten 232 wenigstens eines Teils der dritten Informationen I-3, wobei verarbeitete dritte Informationen I-3' erhalten werden, Senden 234 der zweiten Informationen I-2 basierend wenigstens auf den verarbeiteten dritten Informationen I-3' über die Maschinenschnittstelle 120 (Fig. 2) an die erste elektrische Maschine EM-1.

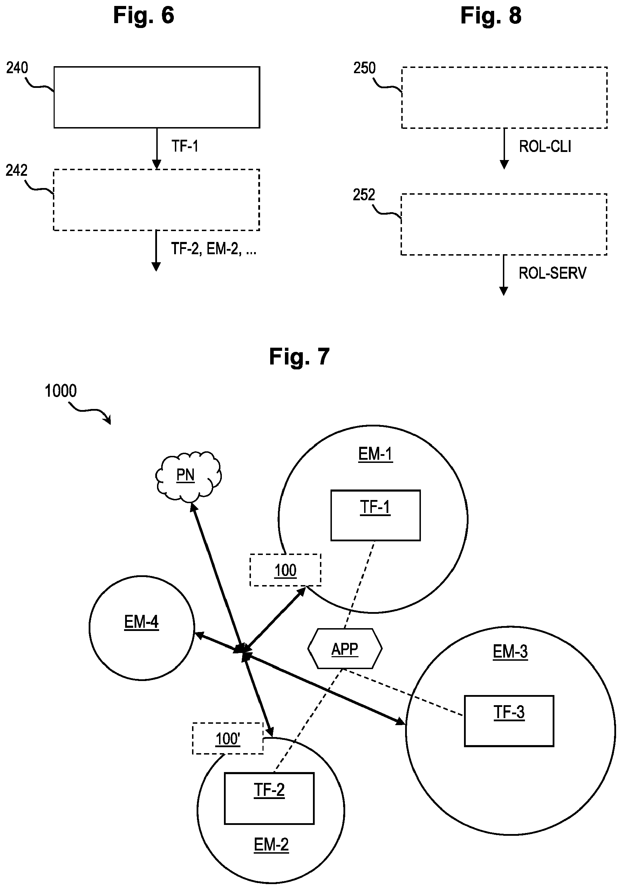

Bei weiteren beispielhaften Ausführungsformen, Fig. 6, 7, ist vorgesehen, dass das Verfahren aufweist: Ausführen 240 wenigstens einer ersten Teilfunktion TF-1, die mit einer, beispielsweise verteilten, Applikation APP (Fig. 7) assoziiert ist, die wenigstens manche Aspekte eines Zusammenwirkens von mehreren elektrischen Maschinen EM-1, EM-2, EM-3, EM-4 steuert, wobei beispielsweise wenigstens eine zweite mit der Applikation APP assoziierte Teilfunktion TF-2 durch wenigstens eine weitere Einheit 100' (Fig. 7) ausführbar ist, die mit der wenigstens einen weiteren elektrischen Maschine EM-2 assoziiert ist, s. den optionalen Block 242 gemäß Fig. 6.

Auf diese Weise ist z.B. die Applikation APP durch ein mehrere elektrische Maschinen EM-1, EM-2, EM-3, EM-4 aufweisendes System 1000 parallel bzw. dezentral ausführbar, beispielsweise indem unterschiedliche elektrische Maschinen EM-1, EM-2, EM-3, ... bzw. deren zugeordnete Vorrichtungen 100, 100', ... jeweilige Teilfunktionen TF-1, TF-2, TF-3, ... der Applikation APP ausführen. Ein entsprechender Datenaustausch zwischen den beteiligten Komponenten, und optional einem z.B. privaten Netz PN, ist beispielsweise realisierbar mittels eines Ethernet-Netzwerks NW (s. auch Fig. 2), das in Fig. 7 durch die nicht bezeichneten Doppelpfeile symbolisiert ist.

Bei weiteren beispielhaften Ausführungsformen, Fig. 8, ist vorgesehen, dass das Verfahren wenigstens eines der folgenden Elemente aufweist: a) zumindest zeitweises Einnehmen 250 einer Client-Rolle ROL-CLI, beispielsweise durch die Vorrichtung 100 (Fig. 2) und/oder durch die Recheneinrichtung 110 bzw. die zugeordnete elektrische Maschine EM-1, beispielsweise für eine zumindest zeitweise Steuerung der ersten elektrischen Maschine EM-1 durch eine andere Einheit, beispielsweise wenigstens eine weitere elektrische Maschine EM-2 bzw. eine mit der wenigstens einen weiteren elektrischen Maschine assoziierte Vorrichtung 100' (Fig. 7), b) zumindest zeitweises Einnehmen 252 (Fig. 7) einer Server-Rolle ROL-SERV, beispielsweise durch die Vorrichtung 100 (Fig. 2) und/oder durch die Recheneinrichtung 110 bzw. die zugeordnete elektrische Maschine EM-1, beispielsweise zur Steuerung einer oder mehrerer (z.B. anderer) elektrischer Maschinen EM-2, EM-3, EM-4.

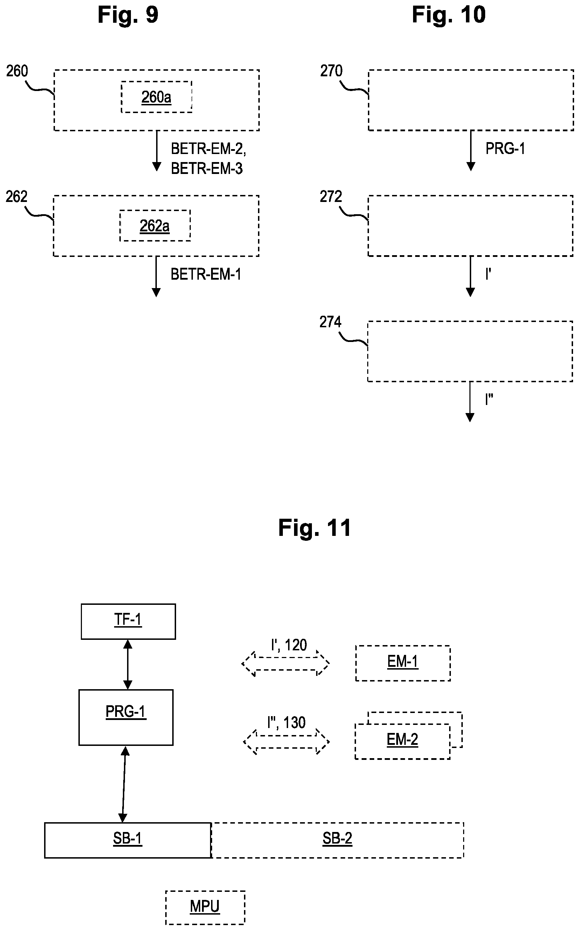

Bei weiteren beispielhaften Ausführungsformen, Fig. 9, ist vorgesehen, dass das Verfahren wenigstens eines der folgenden Elemente aufweist: a) zumindest zeitweises Steuern 260, beispielsweise Regeln 260a, eines Betriebs BETR-EM-2, BETR-EM-3 der wenigstens einen weiteren elektrischen Maschine EM-2, EM-3, beispielsweise über die Kommunikationsschnittstelle 130, beispielsweise im Sinne einer bzw. der verteilten Applikation APP, b) zumindest zeitweises Steuern 262, beispielsweise Regeln 262a, eines Betriebs BETR-EM-1 der ersten elektrischen Maschine EM-1, beispielsweise über die Maschinenschnittstelle 120, beispielsweise im Sinne einer bzw. der verteilten Applikation APP (Fig. 7). Ein Informationsaustausch über die Maschinenschnittstelle 120 kann hierbei beispielsweise mittels der ersten Funktion F-1 (Fig. 2) erfolgen. Ein Informationsaustausch über die Kommunikationsschnittstelle 130 kann hierbei beispielsweise mittels der zweiten Funktion F-2 (Fig. 2) erfolgen.

Bei weiteren beispielhaften Ausführungsformen, Fig. 10, 11, ist vorgesehen, dass das Verfahren wenigstens eines der folgenden Elemente aufweist: a) Ausführen 270 (Fig. 10) eines ersten Computerprogramms PRG-1 in einem, beispielsweise mittels einer Speicherschutzeinrichtung MPU (Fig. 11) verwalteten, Ressourcenbereich, beispielsweise Speicherbereich, SB-1, wobei beispielsweise das erste Computerprogramm PRG-1 mit einer bzw. der ersten Teilfunktion TF-1 einer bzw. der, beispielsweise verteilten, Applikation APP assoziiert ist, b) Austauschen 272 von Informationen I' mittels des ersten Computerprogramms PRG-1 mit der ersten elektrischen Maschine EM-1 über die Maschinenschnittstelle 120, beispielsweise unter Verwendung der ersten Funktion F-1 (Fig. 2), c) Austauschen 274 von Informationen I'' mittels des ersten Computerprogramms PRG-1 mit der wenigstens einen weiteren elektrischen Maschine EM-2, ... über die Kommunikationsschnittstelle 130, beispielsweise unter Verwendung der zweiten Funktion F-2 (Fig. 2).

Fig. 11 zeigt zusätzlich zu dem ersten Speicherbereich SB-1 beispielhaft einen weiteren Speicherbereich SB-2, der z.B. ebenfalls durch die Speicherschutzeinrichtung MPU verwaltet wird.

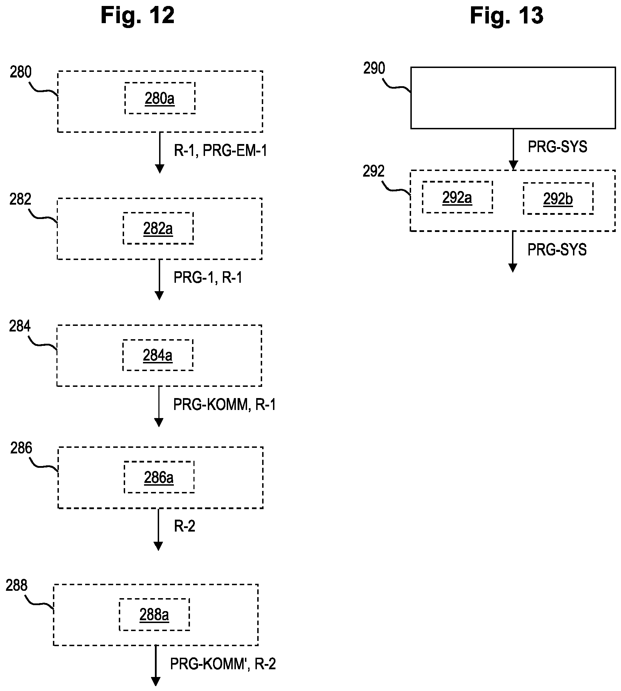

Bei weiteren beispielhaften Ausführungsformen, Fig. 12, ist vorgesehen, dass das Verfahren wenigstens eines der folgenden Elemente aufweist: a) Bereitstellen 280 einer ersten Recheneinrichtung R-1 zur Ausführung wenigstens eines Computerprogramms PRG-EM-1 zur Steuerung wenigstens der ersten elektrischen Maschine EM-1, beispielsweise über die Maschinenschnittstelle 120 (Fig. 2), und, optional, Ausführen 280a des wenigstens einen Computerprogramms PRG-EM-1 zur Steuerung wenigstens der ersten elektrischen Maschine EM-1 mittels der ersten Recheneinrichtung R-1, b) Bereitstellen 282 eines bzw. des ersten Computerprogramms PRG-1, das mit einer bzw. der ersten Teilfunktion TF-1 einer bzw. der, beispielsweise verteilten, Applikation APP (Fig. 7) assoziiert ist, zur Steuerung wenigstens der ersten elektrischen Maschine EM-1 und, optional, Ausführen 282a des ersten Computerprogramms PRG-1 mittels der ersten Recheneinrichtung R-1, c) Bereitstellen 284 eines Computerprogramms PRG-KOMM zur Steuerung der Kommunikationsschnittstelle 130, und, optional, Ausführen 284a des Computerprogramms PRG-KOMM zur Steuerung der Kommunikationsschnittstelle 130 mittels der ersten Recheneinrichtung R-1, d) Bereitstellen 286 einer zweiten Recheneinrichtung R-2, die von der ersten Recheneinrichtung R-1 verschieden ist, zur Steuerung 286a der Kommunikationsschnittstelle 130, e) Bereitstellen 288 eines Computerprogramms PRG-KOMM' zur Steuerung der Kommunikationsschnittstelle 130, und, optional, Ausführen 288a des Computerprogramms PRG-KOMM' zur Steuerung der Kommunikationsschnittstelle 130 mittels der zweiten Recheneinrichtung R-2.

Bei weiteren beispielhaften Ausführungsformen, Fig. 13, ist vorgesehen, dass das Verfahren aufweist: Bereitstellen 290 eines Computerprogramms PRG-SYS zur Steuerung eines Systems 1000 (Fig. 7) aufweisend mehrere elektrische Maschinen, und, optional, Ausführen 292 des Computerprogramms PRG-SYS zur Steuerung des Systems 1000 mittels der ersten Recheneinrichtung R-1 und/oder der zweiten Recheneinrichtung R-2.

Bei weiteren beispielhaften Ausführungsformen, Fig. 13, ist vorgesehen, dass das Ausführen 292 des Computerprogramms PRG-SYS zur Steuerung des Systems 1000 wenigstens eines der folgenden Elemente aufweist: a) Informationsaustausch 292a mit einer bzw. der ersten elektrischen Maschine EM-1 über die Maschinenschnittstelle 120, beispielsweise unter Verwendung der ersten Funktion F-1 (Fig. 2), b) Informationsaustausch 292b mit wenigstens einer weiteren elektrischen Maschine EM-2, EM-3, ... der mehreren elektrischen Maschinen über die Kommunikationsschnittstelle 130, beispielsweise unter Verwendung der zweiten Funktion F-2 (Fig. 2).

Bei weiteren beispielhaften Ausführungsformen, Fig. 2, ist vorgesehen, dass die Kommunikationsschnittstelle 130 eine Ethernet-Schnittstelle, beispielsweise Industrial Ethernet-Schnittstelle, ist.

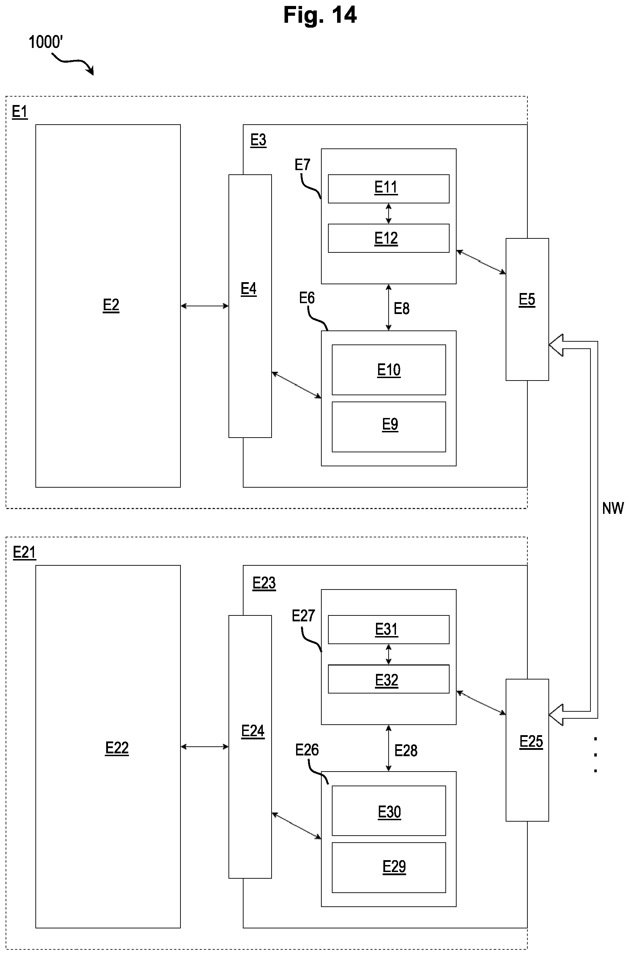

Fig. 14 zeigt schematisch ein vereinfachtes Blockdiagramm eines Systems 1000' gemäß beispielhaften Ausführungsformen. Element E1 symbolisiert einen ersten Antrieb, aufweisend einen Motor E2 und eine elektronische Vorrichtung E3 für den Motor E2. Bei weiteren beispielhaften Ausführungsformen kann die Vorrichtung E3 z.B. identisch oder ähnlich zu der Vorrichtung 100 (Fig. 2) ausgebildet sein.

Bei weiteren beispielhaften Ausführungsformen, Fig. 14, weist die Vorrichtung E3 eine Schnittstelle E4 auf, die z.B. wenigstens manche Aspekte der Maschinenschnittstelle 120 gemäß Fig. 2 realisiert.

Bei weiteren beispielhaften Ausführungsformen, Fig. 14, weist die Vorrichtung E3 eine Kommunikationsschnittstelle E5 auf, z.B. ähnlich zu der Kommunikationsschnittstelle 130 gemäß Fig. 2.

Bei weiteren beispielhaften Ausführungsformen weist die Vorrichtung E3 eine erste Recheneinrichtung E6 auf und eine zweite Recheneinrichtung E7. Über eine, beispielsweise bidirektionale, Datenverbindung E8, z.B. eine Schnittstelle vom Typ QSPI, können die Recheneinrichtungen E6, E7 Informationen austauschen.

Bei weiteren beispielhaften Ausführungsformen ist die erste Recheneinrichtung E6 zur Ausführung von wenigstens einem Computerprogramm E9 zur Steuerung und/oder Regelung des Motors E2 ausgebildet. Das Computerprogramm E9 ist z.B. in einer nicht abgebildeten Speichereinrichtung speicherbar, die der ersten Recheneinrichtung E6 zugeordnet ist. Beispielhaft ist das Computerprogramm E9 von einem Hersteller des Antriebs E1 bereitstellbar und ist dazu ausgebildet, grundlegende Funktionen des Motors E2 zu steuern.

Bei weiteren beispielhaften Ausführungsformen ist die erste Recheneinrichtung E6 zur Ausführung von wenigstens einem Computerprogramm E10 ausgebildet, das z.B. wenigstens eine Teilfunktion TF-1 (Fig. 7) einer z.B. verteilten Applikation APP realisiert. Das Computerprogramm E10 ist z.B. ebenfalls in einer nicht abgebildeten Speichereinrichtung speicherbar, die der ersten Recheneinrichtung E6 zugeordnet ist. Beispielhaft ist das Computerprogramm E10 von einem Anwender des Antriebs E1 bereitstellbar und ist z.B. dazu ausgebildet, die genannte Teilfunktion TF-1 der Applikation APP zu realisieren. Hierfür kann das Computerprogramm E10 bei weiteren beispielhaften Ausführungsformen z.B. auf die Funktionalität des Computerprogramms E9 zurückgreifen.

Bei weiteren beispielhaften Ausführungsformen können die Computerprogramme E9, E10 in unterschiedlichen Ressourcenbereichen, z.B. Speicherbereichen, der ersten Recheneinrichtung E6 ausgeführt werden, was die Sicherheit eines Betriebs steigert. Auf diese Weise kann z.B. ausgeschlossen werden, dass das Computerprogramm E10 auf Speicherbereiche des Computerprogramms E9 zugreift, was z.B. zu einer Beeinträchtigung der Steuerung und/oder Regelung des Motors E2 führen könnte. Eine Trennung der Speicherbereiche E9, E10 kann bei weiteren beispielhaften Ausführungsformen z.B. durch eine Speicherschutzeinrichtung MPU (Fig. 7) realisiert werden.

Bei weiteren beispielhaften Ausführungsformen ist die erste Recheneinrichtung E6 beispielsweise zur Steuerung eines Betriebs der Maschinenschnittstelle E4 ausgebildet.

Bei weiteren beispielhaften Ausführungsformen ist die zweite Recheneinrichtung E7 beispielsweise zur Steuerung eines Betriebs der Kommunikationsschnittstelle E5 ausgebildet. Beispielhaft kann mittels der zweiten Recheneinrichtung E7 z.B. ein Protokoll-Stack E11 realisiert sein, z.B. vom Typ PROFINET, wobei Element E12 beispielsweise eine Socket-Schnittstelle symbolisiert.

Bei weiteren beispielhaften Ausführungsformen, Fig. 14, kann die Vorrichtung E3 die erste Funktion F-1 (Fig. 2) z.B. zur Kommunikation mit dem Motor E2 über die Maschinenschnittstelle E4 verwenden.

Bei weiteren beispielhaften Ausführungsformen, Fig. 14, kann die Vorrichtung E3 die zweite Funktion F-2 (Fig. 2) z.B. zur Kommunikation mit weiteren Komponenten E21, ... über die Kommunikationsschnittstelle E5 und über das Netzwerk NW verwenden.

Bei weiteren beispielhaften Ausführungsformen kann anstelle der beiden Recheneinrichtungen E6, E7, die z.B. jeweils als Mikrocontroller ausgebildet sein können, auch eine einzelne Recheneinrichtung (nicht in Fig. 14 gezeigt, s. z.B. Element 110 aus Fig. 2) vorgesehen sein, die manche oder alle Aspekte der vorstehend beispielhaft beschriebenen Funktionen der Recheneinrichtungen E6, E7 realisiert.

Element E21 symbolisiert einen zweiten Antrieb, aufweisend einen Motor E22 und eine elektronische Vorrichtung E23 für den Motor E22. Bei weiteren beispielhaften Ausführungsformen ist der Antrieb E21 identisch oder ähnlich zu dem Antrieb E1 ausgebildet, wobei die Elemente E22, E23, E24, E25, E26, E27, E28, E29, E30, E31, E32 des Antriebs E21 beispielsweise jeweils den Elementen E2, E3, E4, E5, E6, E7, E8, E9, E10, E11, E12 des Antriebs E1 entsprechen.

Bei weiteren beispielhaften Ausführungsformen, Fig. 14, kann das System 1000' auch mehr als die vorliegend beispielhafte abgebildeten zwei Antriebe E1, E21 aufweisen und z.B. zur Ausführung von verteilten Applikationen APP (Fig. 7), beispielsweise in Bezug auf einen koordinierten bzw. synchronisierten Betrieb der Antriebe E1, E21 sowie ggf. weiterer Komponenten DV, DEV-IoT, ... (Fig. 2) verwendet werden, wobei beispielsweise wenigstens eine Recheneinrichtung E6, E26 zumindest zeitweise als Client oder als Server betreibbar ist.

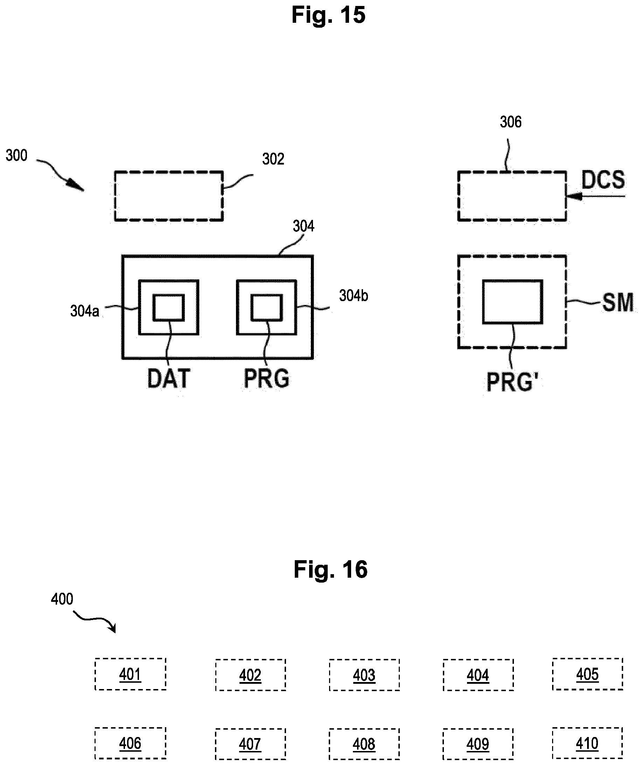

Weitere beispielhafte Ausführungsformen, Fig. 15, beziehen sich auf eine Vorrichtung 300 zur Ausführung wenigstens mancher Aspekte des Verfahrens gemäß den Ausführungsformen. Beispielsweise kann die Vorrichtung 300 dazu verwendet werden, wenigstens Teile der Vorrichtungen 100, 100', E3, E6, E7, E23, E26, E27 zu implementieren.

Bei weiteren beispielhaften Ausführungsformen, Fig. 15, ist vorgesehen, dass die Vorrichtung 300 aufweist: eine wenigstens einen Rechenkern aufweisende Recheneinrichtung ("Computer") 302, eine der Recheneinrichtung 302 zugeordnete Speichereinrichtung 304 zur zumindest zeitweisen Speicherung wenigstens eines der folgenden Elemente: a) Daten DAT, b) Computerprogramm(e) PRG, beispielsweise zur Ausführung des Verfahrens gemäß den Ausführungsformen.

Bei weiteren beispielhaften Ausführungsformen weisen die Daten DAT wenigstens eines der folgenden Elemente auf: a) mit der Applikation APP bzw. der wenigstens einen Teilfunktion TF-1 assoziierte Daten, b) mit der ersten Funktion F-1 (Fig. 2) assoziierte Daten, c) mit der zweiten Funktion F-2 (Fig. 2) assoziierte Daten, d) mit wenigstens einer elektrischen Maschine EM-1, EM-2, EM-3, ... assoziierte Daten, e) mit der Maschinenschnittstelle 120 assoziierte Daten, f) mit der Kommunikationsschnittstelle 130 assoziierte Daten, g) mit der Bibliothek LIB assoziierte Daten.

Bei weiteren beispielhaften Ausführungsformen kann es sich bei dem bzw. den Computerprogrammen PRG beispielsweise um wenigstens eines der vorstehend beispielhaft beschriebenen Computerprogramme handeln.

Bei weiteren beispielhaften Ausführungsformen, Fig. 15, weist die Speichereinrichtung 304 einen flüchtigen Speicher (z.B. Arbeitsspeicher (RAM)) 304a auf, und/oder einen nichtflüchtigen (NVM-) Speicher (z.B. Flash-EEPROM) 304b, oder eine Kombination hieraus oder mit anderen, nicht explizit genannten Speichertypen. Beispielhaft kann wenigstens einer der Speicherbereiche SB-1, SB-2 gemäß Fig. 11 mittels der Speichereinrichtung 304 realisiert sein.

Weitere beispielhafte Ausführungsformen, Fig. 15, beziehen sich auf ein computerlesbares Speichermedium SM, umfassend Befehle PRG', die bei der Ausführung durch einen Computer 302 diesen veranlassen, das Verfahren gemäß den Ausführungsformen auszuführen.

Weitere beispielhafte Ausführungsformen, Fig. 15, beziehen sich auf ein Computerprogramm PRG, umfassend Befehle, die bei der Ausführung des Programms PRG durch einen Computer 302 diesen veranlassen, das Verfahren gemäß den Ausführungsformen auszuführen.

Weitere beispielhafte Ausführungsformen beziehen sich auf ein Datenträgersignal DCS, das das Computerprogramm PRG, PRG' gemäß den Ausführungsformen charakterisiert und/oder überträgt. Das Datenträgersignal DCS ist beispielsweise über eine optionale Datenschnittstelle 306 der Vorrichtung 300 empfangbar.

Ebenfalls sind z.B. die Daten DAT über die optionale Datenschnittstelle 306 übertragbar (sendbar und/oder empfangbar).

Bei weiteren beispielhaften Ausführungsformen realisiert die Datenschnittstelle 306 die Maschinenschnittstelle 120 und/oder die Kommunikationsschnittstelle 130.

Nachfolgend sind weitere beispielhafte Aspekte und Ausführungsformen beschrieben, die jeweils einzeln für sich oder in Kombination miteinander mit wenigstens einer der vorstehend beispielhaft beschriebenen Ausführungsformen kombinierbar sind.

Bei weiteren beispielhaften Ausführungsformen ermöglicht das Prinzip gemäß den Ausführungsformen eine, z.B. direkte, z.B. freie oder deterministische horizontale Kommunikation, z.B. zwischen elektrischen Maschinen wie z.B. Motoren und/oder zwischen Motorsteuergeräten 100, 100', z.B. via Ethernet, z.B. zum Austausch von Informationen, beispielsweise Steuerungskommandos, beispielsweise parallel zu einem Industrial Ethernet oder standalone.

Bei weiteren beispielhaften Ausführungsformen ermöglicht das Prinzip gemäß den Ausführungsformen eine vertikale Einbindung von elektrischen Maschinen EM-1, EM-2, ... z.B. in Firmennetzwerke NP, z.B. zur Kommunikation mit verschiedener Software und/oder Geräten DEV, z.B. ebenfalls via Ethernet.

Bei weiteren beispielhaften Ausführungsformen ermöglicht das Prinzip gemäß den Ausführungsformen, auf eine separate Steuerung, beispielsweise in der Rolle eines Master, zu verzichten, wobei z.B. wenigstens in manchen Ausführungsformen vergleichsweise einfache Aufbauten ermöglicht werden.

Bei weiteren beispielhaften Ausführungsformen ermöglicht eine Bandbreite von Ethernet z.B. auch parallele Kommunikationswege, zum Beispiel IIoT und eine Motorsteuerung, auf demselben physischen Medium, z.B. derselben Leitung, abzuwickeln.

Bei weiteren beispielhaften Ausführungsformen ermöglicht das Prinzip gemäß den Ausführungsformen, einen dezentralen und/oder autonomen Datenaustausch und/oder eine Synchronisation z.B. zwischen einzelnen Motoren EM-1, EM-2, ... und/oder Motorsteuergeräten 100, 100', E3, E23, und/oder z.B. eine gegenseitige Ansteuerung unter den Motoren / Motorsteuergeräten. Dies führt bei weiteren beispielhaften Ausführungsformen z.B. auch zu einer erhöhten Ausfallsicherheit, da bei einem Ausfall einer Komponente z.B. nur Teile des Systems (z.B. eine Teilfunktion TF-1) und nicht das Gesamtsystem betroffen wären. Bei weiteren beispielhaften Ausführungsformen ermöglicht das Prinzip gemäß den Ausführungsformen die Bereitstellung eines standardisierten Interface, z.B, in Motoren EM-1, EM-2, ... und/oder Motorsteuerungen 100, 100', über das diese z.B. von anderen Motoren / Motorsteuergeräten gemäß beispielhaften Ausführungsformen und/oder von externen Programmen und Geräten, z.B. zur Programmierung und/oder Analyse und/oder Kommunikation angesprochen werden können.

Bei weiteren beispielhaften Ausführungsformen sind ein oder mehrere Mechanismen zur Detektion und/oder Bekanntmachung der im Netzwerk NW befindlichen Motoren EM-1, EM-2, ... und/oder Motorsteuerungen 100, 100' vorgesehen.

Bei weiteren beispielhaften Ausführungsformen ermöglicht das Prinzip gemäß den Ausführungsformen die Bereitstellung einer Basis, um Applikationen APP aufsetzen zu können, die z.B. deterministische Mechanismen, z.B. zur Sicherstellung einer Synchronisation, ermöglichen.

Bei weiteren beispielhaften Ausführungsformen ermöglicht das Prinzip gemäß den Ausführungsformen die Bereitstellung einer Basis, um Applikationen APP aufsetzen zu können, die Mechanismen zur Überwachung der Kommunikation ermöglichen.

Bei weiteren beispielhaften Ausführungsformen ermöglicht das Prinzip gemäß den Ausführungsformen die Bereitstellung einer Basis für Mechanismen, um die Motoren EM-1, EM-2, ... zu einem z.B. gleichberechtigten Netzwerk 1000, 1000' zu verbinden.

Bei weiteren beispielhaften Ausführungsformen ermöglicht das Prinzip gemäß den Ausführungsformen die Bereitstellung von Mechanismen, um Motoren EM-1, EM-2, ... als ein Netzwerk NW, 1000, 1000' zu betreiben.

Beispielsweise kann bei weiteren beispielhaften Ausführungsformen eine deterministische Kommunikation zwischen verschiedenen, z.B. gleichberechtigen, Motoren EM-1, EM-2, ... und/oder Motorsteuergeräten 100, 100', beispielsweise ohne einen Einsatz eines dedizierten Masters im System, ermöglicht werden, was z.B. die Realisierung von performanten Steuerungstopologien ohne zentrale Steuerung ermöglicht.

Beispielsweise können bei weiteren beispielhaften Ausführungsformen ein oder mehrere Protokolle wie z.B. Industrial Ethernet und/oder IIoT Kommunikation wie beispielsweise OPC UA parallel zur der Kommunikation zwischen den elektrischen Maschinen EM-1, EM-2, ... gemäß den Ausführungsformen verwendet werden in demselben physikalischen Netzwerk NW.

Nachstehend sind weitere Vorteile und Aspekte genannt, die zumindest zeitweise bei zumindest manchen beispielhaften Ausführungsformen erzielbar sind: Kostengünstiger Systemaufbau, einfacher Systemaufbau, Aufbau dezentraler Topologien, Aufbau modularer Topologien, vergleichsweise hohe Übertragungsraten, vergleichsweise hohe Flexibilität, z.B. durch die Möglichkeit paralleler Kommunikation, effiziente Zustandsüberwachung einzelner Motoren / Motorsteuergeräte, vergleichsweise komplexe autonome Aufgaben eines Motor-Verbundes 1000, 1000' möglich, eigenes Protokoll verwendbar, kann z.B. für zukünftige Funktionen und/oder Geräte (z.B. HMI (human-machine interface)) erweitert werden.

Weitere beispielhafte Ausführungsformen beziehen sich auf eine Vorrichtung 100, 300 gemäß den Ausführungsformen, aufweisend wenigstens eines der folgenden Elemente: a) die Maschinenschnittstelle 120 (Fig. 2), b) die Kommunikationsschnittstelle 130, c) eine bzw. die erste Recheneinrichtung R-1, E6, d) eine bzw. die zweite Recheneinrichtung R-2, E7.

Weitere beispielhafte Ausführungsformen beziehen sich auf eine elektrische Maschine EM-1, E2, beispielsweise Elektromotor, beispielsweise rotierender Elektromotor oder Linearmotor, aufweisend wenigstens eine Vorrichtung 100, 300 gemäß den Ausführungsformen.

Weitere beispielhafte Ausführungsformen, Fig. 16, beziehen sich auf eine Verwendung 400 des Verfahrens gemäß den Ausführungsformen und/oder der Vorrichtung gemäß den Ausführungsformen und/oder der elektrischen Maschine gemäß den Ausführungsformen und/oder des computerlesbaren Speichermediums gemäß den Ausführungsformen und/oder des Computerprogramms gemäß den Ausführungsformen und/oder des Datenträgersignals gemäß den Ausführungsformen für wenigstens eines der folgenden Elemente: a) Steuern 401 und/oder Regeln 402 eines Betriebs wenigstens einer elektrischen Maschine, b) Ermöglichen 403 einer, beispielsweise freien und/oder deterministischen, beispielsweise horizontalen, Kommunikation von einer ersten elektrischen Maschine EM-1 bzw. einer mit der ersten elektrischen Maschine assoziierten Vorrichtung zu wenigstens einer weiteren elektrischen Maschine EM-2 bzw. wenigstens einer mit der weiteren elektrischen Maschine assoziierten Vorrichtung, c) Verwendung 404 eines Ethernet-Kommunikationssystems, beispielsweise Netzwerks, zur Realisierung von verteilten Applikationen, die mit wenigstens einer elektrischen Maschine assoziiert sind, d) dezentrale Implementierung 405 von Anwendungen für eine Steuerung und/oder Regelung, die wenigstens eine elektrische Maschine verwenden, e) Vermeiden 406 einer, beispielsweise dedizierten, Master-Rolle für einen Datenaustausch bezüglich wenigstens einer elektrischen Maschine, f) Bereitstellen 407 mehrerer Kommunikationskanäle, beispielsweise über ein selbes Busmedium eines Kommunikationssystems, beispielsweise Netzwerks, wobei beispielsweise ein erster Kommunikationskanal für eine Steuerung und/oder Regelung wenigstens einer elektrischen Maschine verwendbar ist, und wobei beispielsweise ein zweiter Kommunikationskanal für Aspekte des Internet-of-Things, IoT, beispielsweise Industrial IoT, IIoT, verwendbar ist, g) Erhöhen 408 einer Ausfallsicherheit, h) Bereitstellen 409 und/oder Betreiben 410 eines Netzwerks von elektrischen Maschinen.

## Patentansprüche

1. Verfahren, beispielsweise computerimplementiertes Verfahren, zum Verarbeiten von mit wenigstens einer elektrischen Maschine (EM-1, EM-2, ...), beispielsweise einem Elektromotor, assoziierten Daten, aufweisend: Bereitstellen (200) einer ersten Funktion (F-1) zur Kommunikation mit einer ersten elektrischen Maschine (EM-1) über eine Maschinenschnittstelle (120), Bereitstellen (202) einer zweiten Funktion (F-2) zur Kommunikation mit wenigstens einer weiteren elektrischen Maschine (EM-2, EM-3, ...) über eine Kommunikationsschnittstelle (130), wobei die Kommunikationsschnittstelle (130) verschieden ist von der Maschinenschnittstelle (120).

2. Verfahren nach Anspruch 1, aufweisend wenigstens eines der folgenden Elemente: a) Bereitstellen (200a) der ersten Funktion (F-1) mittels einer Bibliothek (LIB), b) Bereitstellen (202a) der zweiten Funktion (F-2) mittels einer bzw. der Bibliothek (LIB).

3. Verfahren nach wenigstens einem der vorstehenden Ansprüche, aufweisend wenigstens eines der folgenden Elemente: a) Empfangen (210) von ersten Informationen (I-1) über die Maschinenschnittstelle (120) von der ersten elektrischen Maschine (EM-1), b) Senden (211) von zweiten Informationen (I-2) über die Maschinenschnittstelle (120) an die erste elektrische Maschine (EM-1), c) Empfangen (212) von dritten Informationen (I-3) über die Kommunikationsschnittstelle (130) von der wenigstens einen weiteren elektrischen Maschine (EM-2, EM-3, ...), d) Senden (213) von vierten Informationen (I-4) über die Kommunikationsschnittstelle (130) an die wenigstens eine weitere elektrische Maschine (EM-2, EM-3, ...), e) Verarbeiten (214) wenigstens eines Teils der ersten Informationen (I-1), f) Verarbeiten (215) wenigstens eines Teils der dritten Informationen (I-3).

4. Verfahren nach Anspruch 3, aufweisend: Empfangen (220) der ersten Informationen (I-1) über die Maschinenschnittstelle (120) von der ersten elektrischen Maschine (EM-1), Verarbeiten (222) wenigstens eines Teils der ersten Informationen (I-1), wobei verarbeitete erste Informationen (I-1') erhalten werden, Senden (224) der vierten Informationen (I-4) basierend wenigstens auf den verarbeiteten ersten Informationen (I-1') über die Kommunikationsschnittstelle (130) an die wenigstens eine weitere elektrische Maschine (EM-2, EM-3, ...).

5. Verfahren nach wenigstens einem der Ansprüche 3 bis 4, aufweisend: Empfangen (230) der dritten Informationen (I-3) über die Kommunikationsschnittstelle (130) von der wenigstens einen weiteren elektrischen Maschine (EM-2, EM-3, ...), Verarbeiten (232) wenigstens eines Teils der dritten Informationen (I-3), wobei verarbeitete dritte Informationen (I-3') erhalten werden, Senden (234) der zweiten Informationen (I-2) basierend wenigstens auf den verarbeiteten dritten Informationen (I-3') über die Maschinenschnittstelle (120) an die erste elektrische Maschine (EM-1).

6. Verfahren nach wenigstens einem der vorstehenden Ansprüche, aufweisend: Ausführen (240) wenigstens einer ersten Teilfunktion (TF-1), die mit einer, beispielsweise verteilten, Applikation (APP) assoziiert ist, die wenigstens manche Aspekte eines Zusammenwirkens von mehreren elektrischen Maschinen (EM-1, EM-2, ...) steuert, wobei beispielsweise wenigstens eine zweite mit der Applikation (APP) assoziierte Teilfunktion (TF-2) durch wenigstens eine weitere Einheit (100') ausführbar ist, die mit der wenigstens einen weiteren elektrischen Maschine (EM-2) assoziiert ist.

7. Verfahren nach wenigstens einem der vorstehenden Ansprüche, aufweisend wenigstens eines der folgenden Elemente: a) zumindest zeitweises Einnehmen (250) einer Client-Rolle (ROL-CLI), b) zumindest zeitweises Einnehmen (252) einer Server-Rolle (ROL-SERV).

8. Verfahren nach wenigstens einem der vorstehenden Ansprüche, aufweisend wenigstens eines der folgenden Elemente: a) zumindest zeitweises Steuern (260), beispielsweise Regeln (260a), eines Betriebs (BETR-EM-2, BETR-EM-3, ...) der wenigstens einen weiteren elektrischen Maschine (EM-2, EM-3, ...), beispielsweise über die Kommunikationsschnittstelle (130), beispielsweise im Sinne einer bzw. der verteilten Applikation (APP), b) zumindest zeitweises Steuern (262), beispielsweise Regeln (262a), eines Betriebs (BETR-EM-1) der ersten elektrischen Maschine (EM-1), beispielsweise über die Maschinenschnittstelle (130), beispielsweise im Sinne einer bzw. der verteilten Applikation (APP).

9. Verfahren nach wenigstens einem der vorstehenden Ansprüche, aufweisend wenigstens eines der folgenden Elemente: a) Ausführen (270) eines ersten Computerprogramms (PRG-1) in einem, beispielsweise mittels einer Speicherschutzeinrichtung (MPU) verwalteten Ressourcenbereich, beispielsweise Speicherbereich (SB-1), wobei beispielsweise das erste Computerprogramm (PRG-1) mit einer bzw. der ersten Teilfunktion (TF-1) einer bzw. der, beispielsweise verteilten, Applikation (APP) assoziiert ist, b) Austauschen (272) von Informationen (I') mittels des ersten Computerprogramms (PRG-1) mit der ersten elektrischen Maschine (EM-1) über die Maschinenschnittstelle (120), c) Austauschen (274) von Informationen (I'') mittels des ersten Computerprogramms (PRG-1) mit der wenigstens einen weiteren elektrischen Maschine (EM-2, EM-2, ...) über die Kommunikationsschnittstelle (130).

10. Verfahren nach wenigstens einem der vorstehenden Ansprüche, aufweisend wenigstens eines der folgenden Elemente: a) Bereitstellen (280) einer ersten Recheneinrichtung (R-1) zur Ausführung wenigstens eines Computerprogramms (PRG-EM-1) zur Steuerung wenigstens der ersten elektrischen Maschine (EM-1), beispielsweise über die Maschinenschnittstelle (120), und, optional, Ausführen (280a) des wenigstens einen Computerprogramms (PRG-EM-1) zur Steuerung wenigstens der ersten elektrischen Maschine (EM-1) mittels der ersten Recheneinrichtung (R-1), b) Bereitstellen (282) eines bzw. des ersten Computerprogramms (PRG-1), das mit einer bzw. der ersten Teilfunktion (TF-1) einer bzw. der, beispielsweise verteilten, Applikation (APP) assoziiert ist, zur Steuerung wenigstens der ersten elektrischen Maschine (EM-1) und, optional, Ausführen (282a) des ersten Computerprogramms (PRG-1) mittels der ersten Recheneinrichtung (R-1), c) Bereitstellen (284) eines Computerprogramms (PRG-KOMM) zur Steuerung der Kommunikationsschnittstelle (130), und, optional, Ausführen (284a) des Computerprogramms (PRG-KOMM) zur Steuerung der Kommunikationsschnittstelle (130) mittels der ersten Recheneinrichtung (R-1), d) Bereitstellen (286) einer zweiten Recheneinrichtung (R-2), die von der ersten Recheneinrichtung (R-1) verschieden ist, zur Steuerung (286a) der Kommunikationsschnittstelle (130), e) Bereitstellen (288) eines Computerprogramms (PRG-KOMM') zur Steuerung der Kommunikationsschnittstelle (130), und, optional, Ausführen (288a) des Computerprogramms (PRG-KOMM') zur Steuerung der Kommunikationsschnittstelle (130) mittels der zweiten Recheneinrichtung (R-2), wobei beispielsweise das Verfahren aufweist: Bereitstellen (290) eines Computerprogramms (PRG-SYS) zur Steuerung eines Systems (1000) aufweisend mehrere elektrische Maschinen (EM-1, EM-2, EM-3, ...), und, optional, Ausführen (292) des Computerprogramms (PRG-SYS) zur Steuerung des Systems (1000) mittels der ersten Recheneinrichtung (R-1) und/oder der zweiten Recheneinrichtung (R-2), wobei beispielsweise das Ausführen (292) des Computerprogramms (PRG-SYS) zur Steuerung des Systems (1000) wenigstens eines der folgenden Elemente aufweist: a) Informationsaustausch (292a) mit einer bzw. der ersten elektrischen Maschine (EM-1) über die Maschinenschnittstelle (120), b) Informationsaustausch (292b) mit wenigstens einer weiteren elektrischen Maschine (EM-2, EM-3, ...) der mehreren elektrischen Maschinen (EM-1, EM-2, EM-3, ...) über die Kommunikationsschnittstelle (130) .

11. Vorrichtung (100) zur Ausführung des Verfahrens nach wenigstens einem der vorstehenden Ansprüche.

12. Vorrichtung (100) nach Anspruch 11, aufweisend wenigstens eines der folgenden Elemente: a) die Maschinenschnittstelle (120), b) die Kommunikationsschnittstelle (130), wobei beispielsweise die Kommunikationsschnittstelle (130) eine Ethernet-Schnittstelle, beispielsweise Industrial Ethernet-Schnittstelle, ist, c) eine bzw. die erste Recheneinrichtung (R-1), d) eine bzw. die zweite Recheneinrichtung (R-2).

13. Elektrische Maschine (EM-1), beispielsweise Elektromotor, beispielsweise rotierender Elektromotor oder Linearmotor, aufweisend wenigstens eine Vorrichtung (100) nach wenigstens einem der Ansprüche 11 bis 12.

14. Computerlesbares Speichermedium (SM), umfassend Befehle (PRG), die bei der Ausführung durch einen Computer (302) diesen veranlassen, das Verfahren nach wenigstens einem der Ansprüche 1 bis 10 auszuführen.

15. Computerprogramm (PRG), umfassend Befehle, die bei der Ausführung des Programms (PRG) durch einen Computer (302) diesen veranlassen, das Verfahren nach wenigstens einem der Ansprüche 1 bis 10 auszuführen.
